# EUROPEAN PATENT SPECIFICATION

(11) **EP 2 713 502 B1**
(45) Date of publication and mention of the grant of the patent: **26.12.2018**
(21) Application number: 13182340.3
(22) Date of filing: 30.08.2013
(51) Int. Cl.: H02P 27/08, H02P 21/02, H02P 21/00

(54) **AC motor drive system and motor vehicle**
Wechselstrommotorantriebssystem und Kraftfahrzeug
Système d'entraînement à moteur CA et véhicule à moteur

(30) Priority: 28.09.2012 JP 2012215447
(43) Date of publication of application: 02.04.2014
(73) Proprietor: Hitachi, Ltd., Tokyo 100-8280 (JP)
(72) Inventor: Iwaji, Yoshitaka, Chiyoda-ku, Tokyo 100-8280 (JP); Sakai, Toshifumi, Chiyoda-ku, Tokyo 100-8280 (JP); Kojima, Tetsuo, Chiyoda-ku, Tokyo 100-8280 (JP)
(74) Representative: Gill, Stephen Charles

(56) References cited:
- WO-A1-2011/155013
- JP-A- 2007 104 778
- US-A- 5 744 927
- US-A1- 2010 052 583

## Description

### BACKGROUND OF THE INVENTION

### 1. Technical Field

The present invention relates to an AC motor or a drive system for an AC motor and, for example, to a control device for a rotating machinery in electric railroad vehicles, electric cars, industrial inverters, wind force power generation systems, and diesel motor systems.

### 2. Description of the Related Art

In conjunction with the worldwide trend in energy saving and global environmental protection, motors driven by an inverter are applied to various products. In particular, such motors are spread in the field of art in which motors having a large capacity are used such as electric railroad vehicles or wind force power generation systems. In a motor drive system for electric railroad vehicles, improvement of efficiency of a motor body for achieving high efficiency or improvement of a convertor that drives the motor are under way.

In order to reduce losses of the converter most efficiently, lowering of an average value of a switching frequency is necessary, and, for example, in the converter having a large capacity, a switching operation of the converter is performed at carrier frequencies not exceeding several hundred Hz. There is also a report saying that the efficiency is improved by employing a shot key barrier diode using silicon carbide as a diode used in a switching element.

The railroad vehicle is devised to control the number of pulses at the time of PWM (pulse width modulation) so as to prevent the number of times of switching from increasing in a high-speed area as described in JP-A-2005-237194. In general, a "synchronous PWM" which generates pulses by synchronizing a drive frequency of an AC motor and the carrier frequency when performing PWM is employed to prevent generation of excessive harmonics and, simultaneously, suppress increase in number of times of switching.

The rotating machineries are designed while placing more importance to efficiency. In order to design high-efficiency rotating machineries, the coil resistance (a copper loss), which is one of electric constants, is minimized. The motor for the railroad vehicle is based on variable speed driving using the inverter in principle, so that a harmonic loss in association with the switching of the inverter is generated. The harmonic loss of the motor mainly includes an iron loss and a secondary copper loss. These losses generally show complex characteristics with respect to the harmonics.

Therefore, in order to achieve a maximum efficiency in an entire drive system including the inverter and the motor, control for a complex system is required.

JP-A-2012-120250 discloses a technology in which the ratio of the harmonic loss of the motor is calculated, and the number of times of switching of the inverter is adjusted correspondingly.

The loss in the drive system of the AC motor is roughly classified into two types. One is a loss generated by the AC motor, and the other one is a loss generated by a power converter. Furthermore, the loss generated by the AC motor is divided into a loss caused by a fundamental wave component (hereinafter referred to as a fundamental wave loss) and a loss caused by the harmonics generated by the inverter (hereinafter referred to as a harmonic loss).

These losses vary depending on various causes, such as a fundamental wave voltage, a fundamental wave current, a phase factor, the switching frequency of the inverter, a switching system, and the DC voltage of the inverter, which indicate driving state of the AC motor. Minimizing these losses independently cannot necessarily achieve the minimization of the entire system. Although maximization of the efficiency totally as an entire system is required, such a method is not established as it now stands.

US 2010/052583 proposes a vehicle including a motor for driving wheels, an inverter to drive the motor, and a control device to perform PWM control of the inverter. JP 2007 104778 proposes a vehicle electric motor controller. WO 2011/155013 proposes a control device which uses PWM to control an inverter which controls the output of a motor. US 5744927 proposes an inverter control apparatus and method for a motor driven by an inverter circuit.

It is an object of the invention to realize minimization of the total loss from magnification relationships among a fundamental wave loss generated by an AC motor, a loss of an inverter that drives the motor, and a loss generated by a harmonic of the inverter. Since the fundamental wave loss is increased with increase in load of the AC motor, the switching frequency of the inverter is lowered so as to lower the fundamental wave loss, and the loss caused by the fundamental wave current is lowered, so that the efficiency of the system is improved. In contrast, since the harmonic loss of the AC motor is dominant in a light load area, the efficiency is maximized by increasing the switching frequency of the inverter or the number of pulses and reducing a harmonic current. In this manner, the problem may be solved by changing the switching frequency of the inverter or the number of pulses according to the load.

The present invention provides an AC motor drive system according to claim 1.

According to the drive system of the AC motor of a preferred embodiment of the invention, control with a maximum efficiency of the entire system according to a drive frequency, a drive voltage, and a load state of the AC motor is enabled.

Other objects and the characteristics of the invention will be apparent by examples described below.

### BRIEF DESCRIPTION OF THE DRAWINGS

Fig. 1 is a block diagram illustrating a configuration of an AC motor drive system according to a first comparative example;
Fig. 2 is a graph illustrating a carrier frequency with respect to a drive frequency when performing pulse width modulation according to the first comparative example;
Fig. 3 is a graph illustrating a map of deriving the number of pulses from the drive frequency and a voltage modulation rate command when performing the pulse width modulation according to the first comparative example;
Figs. 4A to 4C are graphs illustrating system losses at the time of three-pulse drive and nine-pulse drive according to the first comparative example;
Figs. 5A to 5C are graphs illustrating system losses at the time of one-pulse drive and three-pulse drive according to the first comparative example;
Fig. 6 is a block diagram illustrating a configuration of an AC motor drive system according to a second comparative example;
Fig. 7 is a graph illustrating system losses at the time of one-pulse drive and three-pulse drive according to the second comparative example;
Fig. 8 is a block diagram illustrating a configuration of a carrier frequency determiner according to a first embodiment of the invention;
Fig. 9 is a block diagram illustrating a configuration of a carrier frequency determiner according to a second embodiment of the invention;
Fig. 10 is a block diagram illustrating a configuration of a harmonic loss computing unit according to a third embodiment of the invention;
Fig. 11 is a graph illustrating a relationship between an evaluation function and a harmonic loss according to the third embodiment of the invention;
Fig. 12 is a block diagram illustrating a configuration of an AC motor drive system according to a third comparative example; and
Fig. 13 is a block diagram illustrating a configuration of an AC motor drive system used in a railroad vehicle according to a fourth embodiment of the invention.

### DESCRIPTION OF PREFERRED EMBODIMENTS

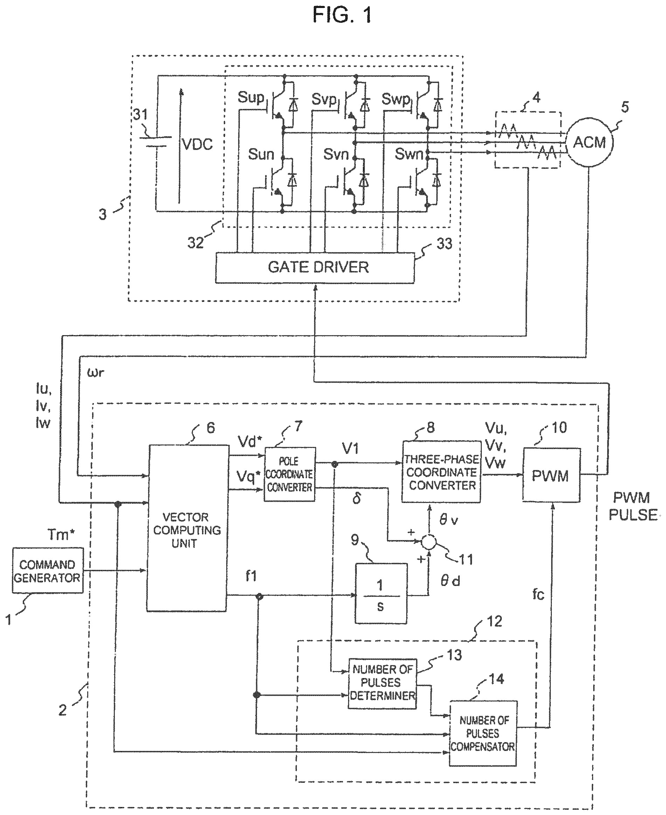

Referring now to Fig. 1 to Fig. 13, embodiments of the invention and comparative examples will be described.

### First Comparative Example

Fig. 1 illustrates a motor drive system configured to drive an AC motor 5. Components illustrated in Fig. 1 are composed of a command generator 1 configured to generate a torque command Tm* of the AC motor 5, a controller 2 configured to perform control for generating a torque which matches the torque command Tm*, an inverter 3 configured to drive the AC motor 5, and a current sensor 4 configured to detect an electric current flowing in the AC motor 5.

The inverter 3 includes a DC power source 31 configured to supply power to the inverter, an inverter main circuit unit 32 including six switching elements Sup to Swn, and a gate driver 33 configured to directly drive the inverter main circuit unit 32.

The command generator 1 is a controller configured to generate the torque command Tm* to the AC motor and positioned on a higher level of the controller 2. The controller 2 controls a generated torque of the AC motor 5 on the basis of a torque command from the command generator 1.

The controller 2 will be operated as follows. Three-phase AC currents Iu, Iv, and Iw, which are AC current detection values of the AC motor 5 are separated into a torque current component (q axis current component) and an excitation current component (d-axis current component) by a vector computing unit 6 to control the respective currents. As a result of the current control, voltage commands Vd* and Vq* on a dq axis, which is a rotational coordinate axis, are computed and are converted into a voltage amplitude command V1 and a voltage phase command δ by a pole coordinate converter 7. A drive frequency f1 of the AC motor is also computed by the vector computing unit 6. The drive frequency f1 is integrated by an integrator 9 to calculate a control phase θd. Then, the voltage phase command δ is added by an adder 11 to θd to obtain the three-phase AC voltage commands Vu, Vv, and Vw by a three-phase coordinate converter assuming that a voltage phase is θv.

A PWM pulse generator 10 generates a triangle wave carrier on the basis of a carrier frequency fc, compares the magnitude with the three-phase AC voltage commands Vu, Vv, and Vw, whereby a pulse width modulation is performed. An ON/OFF control of the switching element of the inverter 3 is performed by this pulse-width-modulated signal.

The carrier frequency fc is calculated by a carrier frequency determiner 12. In the carrier frequency determiner, the carrier frequency fc is determined on the basis of the voltage amplitude command V1, the drive frequency f1, and the three-phase AC currents Iu, Iv, and Iw.

In the case of a system having a large capacity as a drive system for a railroad vehicle, it is difficult to set the carrier frequency to a high value, and is normally set to a value on the order of the range from several hundred Hz to 2 kHz. In contrast, since the drive frequency f1 is also several hundred Hz, a synchronous PWM system is employed in the high-speed range. The synchronous PWM is configured to resolve problems such as a beat phenomenon by setting the ratio of the carrier frequency fc to the drive frequency f1 to integral multiple. However, in order to achieve the three-phase AC current having a symmetry waveform, conditions of synchronism have limitations, and the number of pulses N(=fc/f1) has conditions of being multiples of three, and odd numbers. Under such conditions, N has values of 3, 9, 15, 21, ... (N=1, which is a case of one pulse, is also possible) . However, since the probability of occurrence of the beat phenomenon is reduced with increase in value of N, the upper limit of the synchronous PWM is on the order of N=15, and in other cases, an asynchronous PWM in which the carrier frequency is fixed is employed.

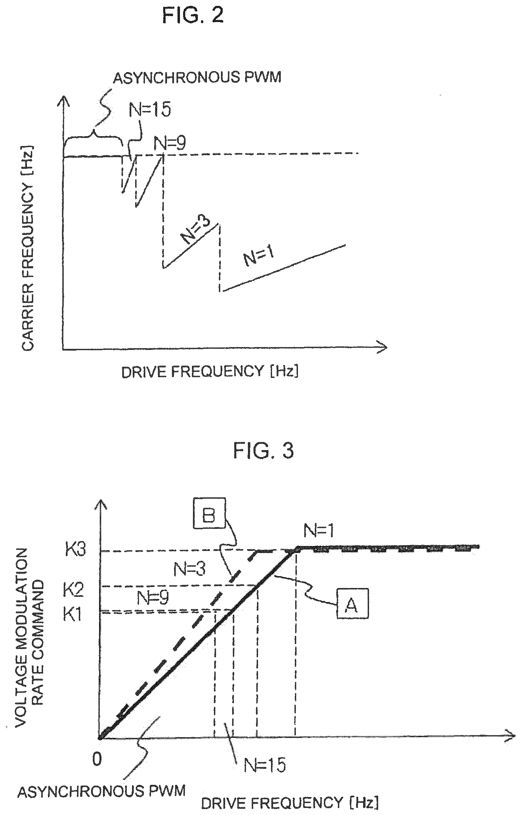

Fig. 2 illustrates a relationship between the drive frequency f1 and the carrier frequency fc (and the number of pulses N). The number of pulses N is reduced with increase of the drive frequency f1, and finally, a one-pulse driving is performed. Actually, the number of pulses is changed not only by the drive frequency f1, but also by the voltage amplitude command V1. Fig. 3 is a graph illustrating a relationship between the drive frequency f1, a voltage modulation rate command (the ratio between the voltage amplitude command V1 and a DC voltage detection value VDC), and the number of pulses. In order to increase an output voltage from the inverter 3, it is necessary to reduce the number of pulses, and the one pulse driving is necessary in order to output a maximum voltage. Therefore, in order to obtain a high modulation rate, it is necessary to switch the number of pulses separately from the drive frequency.

A map of the number of pulses illustrated in Fig. 3 is stored in a number of pulses determiner 13 in Fig. 1. Here, the number of pulses as a base at the time of the PWM modulation is determined.

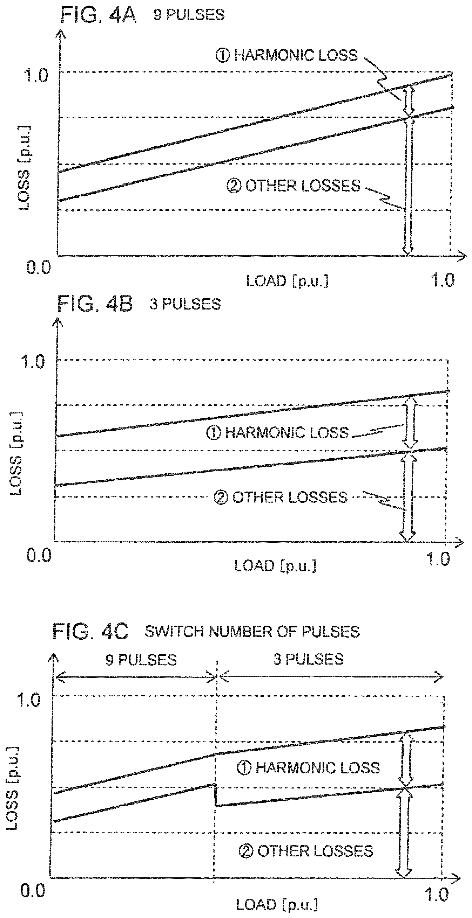

Subsequently, a number of pulses compensator 14 as a characteristic point of the invention will be described. In the number of pulses compensator 14, compensation of the number of pulses is performed on the number of pulses N determined by the number of pulses determiner 13 according to the operation conditions of the AC motor 5. Here, in order to monitor the operating state, a phase current of the AC motor 5 is observed. Figs. 4A to 4C illustrate the load of the AC motor driven at a constant frequency and the loss generated at that time. Fig. 4A illustrates a case of 9 pulses, and Fig. 4B illustrates a case of 3 pulses. The losses may be roughly divided into a harmonic loss and other losses as a breakdown. The harmonic loss is a loss caused by a harmonic voltage included in the inverter 3, and when the AC motor is an induction motor, a harmonic secondary copper loss mainly becomes dominant. The harmonic loss may be considered to be substantially constant irrespective of the load if the number of pulses and the modulation rate are determined. This is because the harmonic constantly flows into a secondary circuit of the induction motor, and hence a slip with respect to components having high frequencies becomes substantially "l". In a case of a permanent magnet motor, although the secondary copper loss does not occur, a significant harmonic iron loss exits. The harmonic iron loss may also be considered to be substantially constant irrespective of the load.

Other than the loss caused by harmonics, a copper loss caused by the fundamental wave current is significant and may be considered to be substantially proportional to the load. A conduction loss and a switching loss of the inverter are also considered to be proportional to the load.

As illustrated in Figs. 4A and 4B, the respective breakdowns of the losses in 9 pulses and 3 pulses are different. Although the harmonic is lowered by increasing the number of pulses, the switching loss is increased because the number of times of switching is increased. It is understood that loss characteristics vary depending on the load.

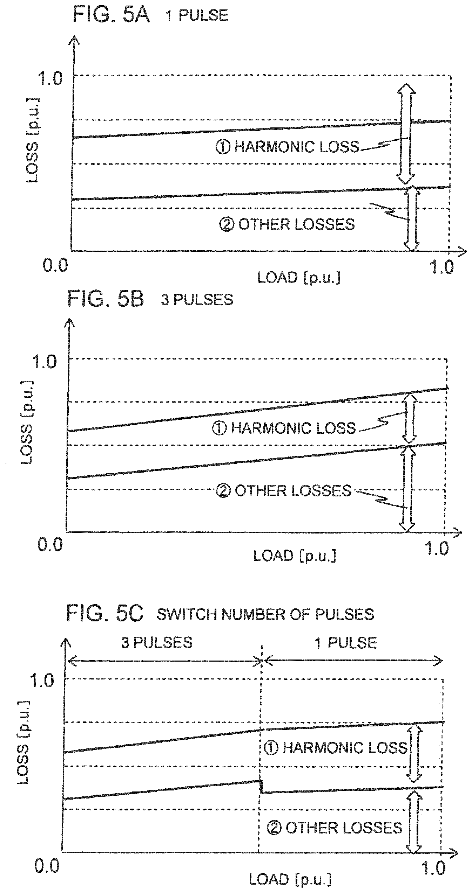

Therefore, as illustrated in Fig. 4C, it is understood that the entire efficiency is improved by employing 9 pulses in the light load area and 3 pulses in the heavy load area. In the same manner, Figs. 5A to 5C illustrate the losses in 1 pulse and 3 pulses. In one pulse, since the output voltage of the inverter 3 is maximized, the current may be minimized when considering the output of the same power. Therefore, the copper loss may be reduced by the reduction of the current, and the efficiency in the heavy load area is improved. However, since the harmonic of the one-pulse driving is significantly high, the harmonic loss becomes dominant under low load conditions, and the loss is reduced by increasing the number of pulses to 3 pulses.

The number of pulses compensator 14 as the characteristic point of the invention determines the load state from the magnitude of the current, and operates so as to change the pulse according to a change-over point obtained in advance. Therefore, maximization of the efficiency according to the operating state may be realized.

### Second Comparative Example

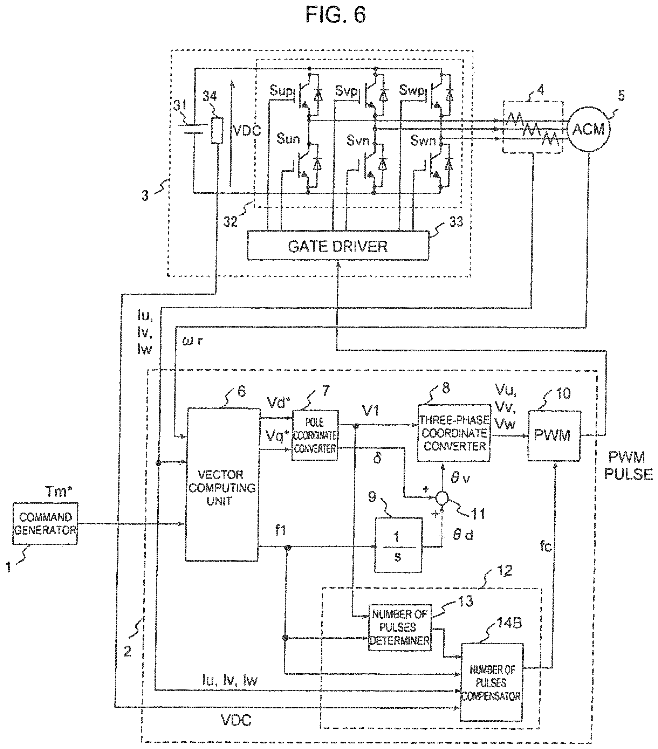

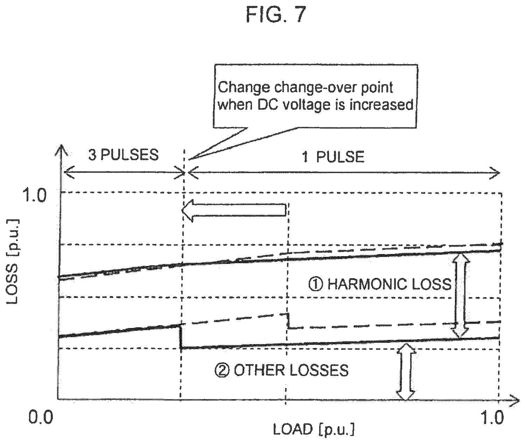

Referring now to Fig. 6 and Fig. 7, a second comparative example will be described.

In the first comparative example, the number of pulses when performing the PWM control is normally determined based on the drive frequency and the drive voltage. In contrast, the second embodiment shows that the motor drive system having a higher efficiency may be realized by taking the load state of the motor into consideration.

In the second comparative example, a method of determining the number of pulses using DC voltage information of the inverter will be described.

Fig. 6 is a block diagram illustrating a configuration of a second comparative example. Reference numerals 1 to 13, 31, 32, and 33 are the same components as those in the first embodiment in Fig. 1. In the second comparative example, a voltage sensor 34 configured to detect the voltage of the DC voltage detection value VDC is newly added, and a voltage detection value thereof is input to a number of pulses compensator 14B.

The number of pulses compensator 14B is different from the number of pulses compensator 14 in Fig. 1, in that the number of pulses is compensated considering the voltage value of the DC power source 31 of the inverter 3.

The DC power source 31 of the inverter may be configured to be voltage variable by using a converter of a pressor type (or depressor type). The efficiency of the AC motor is significantly changed by the power source voltage VDC of the inverter.

For example, a constant torque driving to a high-speed area is enabled and the drive current of the current motor may be reduced by setting the voltage high (the AC motor for the railroad vehicle (mainly the induction motor) is operated by a constant output driving in the high-speed area, and is driven in a state in which an excitation current is reduced. Therefore, when the load is increased, a torque current needs to be increased significantly, and hence the efficiency is lowered.).

However, since a harmonic current is increased when the DC voltage is set to be high, the harmonic loss is increased. In contrast, if the DC voltage can be lowered at the time of low-speed driving, the harmonic current may be reduced, which contributes to loss reduction.

Fig. 7 illsutrates the change of the loss when the DC voltage VDC is increased. When comparing the one pulse system and the three pulse system, the loss of the one pulse system is totally reduced by increasing the VDC. The reason is that the copper loss is reduced by the reduction of the fundamental wave current. Therefore, when the DC voltage is increased, the loss is reduced in total by shifting the changeover point of the number of pulses to the light-load side.

By performing the change of the change-over point as described above according to the map preset by the number of pulses compensator 14B, the motor drive system having higher efficiency is realized.

### First Embodiment

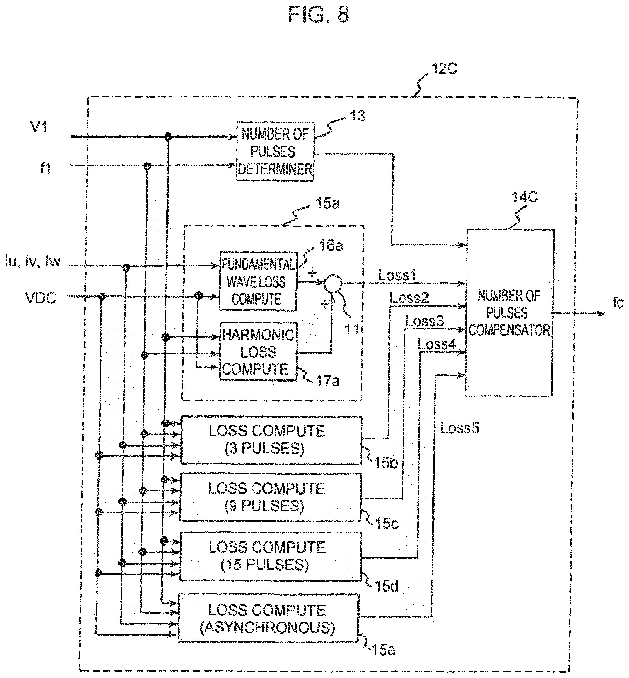

Referring now to Fig. 8, a first embodiment of the invention will be described.

The first and second comparative examples disclose systems in which the maximization of efficiency is enabled by changing the number of pulses at the time of PWM control according to the load state of the AC motor or by considering the DC voltage value of the inverter. In these configurations, determination of the number of pulses is performed on the basis of a data table calculated in advance, and hence depends on the accuracy of the table or resolution.

In the first embodiment, loss calculation is performed in real time and the AC motor driving always at an optimal number of pulses is realized.

In the first embodiment illustrated in Fig. 8, a carrier frequency determiner 12C is used instead of the carrier frequency determiner 12 illustrated in Fig. 1 and Fig. 6 in the first and seconds embodiments. The number of pulses determiner 13 in Fig. 8 is the same one as those illustrated in Fig. 1 and Fig. 6. Loss computing units 15a to 15e (set from one number of pulses to another) are units for computing the loss at the time when the PWM is performed from the state quantity of the system on the basis of the respective numbers of pulses. The respective loss computing units computes losses Loss 1 to Loss 5, and enters the computed losses to the number of pulses compensator 14C. The number of pulses compensator 14C selects the number of pulses having the least loss from a computed loss values, and determines the carrier frequency fc on the basis of the computed loss value.

The interiors of the respective loss computing units 15a to 15e each include a fundamental wave loss computing unit 16a and a harmonic loss computing unit 17a, and loss computation is constantly performed. The fundamental wave loss computing unit 16a calculates the loss (mainly the copper loss) in association with the fundamental wave current of the AC motor on the basis of phase current information and the DC voltage. The harmonic loss computing unit 17a computes the loss of the harmonic loss on the basis of the DC voltage value VDC, the drive frequency f1, and the voltage command V1 of the inverter. The computations of the loss of the fundamental wave and the harmonic are performed simultaneously, and the both values are added by an adder 11a so that the total loss is calculated.

According to the examples, since the loss computation may be performed anytime with different number of pulses according to the driving state of the AC motor and the DC voltage value of the inverter, the real time driving having a maximum efficiency is enabled. Therefore, increase in efficiency of the motor drive system is enabled.

### Second Embodiment

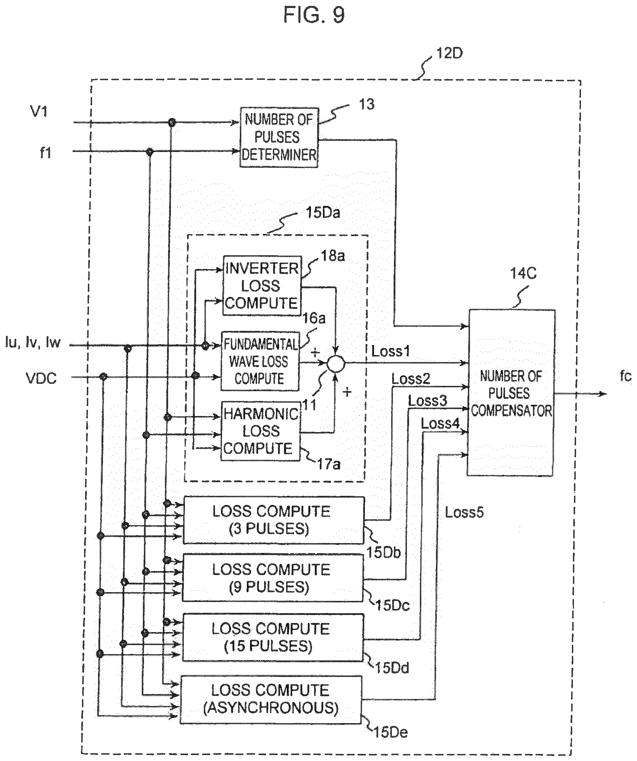

Referring now to Fig. 9, a second embodiment of the invention will be described.

In the second embodiment, loss calculation is performed in real time and the AC motor driving always at an optimal number of pulses is realized in the same manner as the first embodiment described above. The second embodiment is different from the first embodiment in that the loss of the inverter is also considered.

In the second embodiment illustrated in Fig. 9, a carrier frequency determiner 12D is used instead of the carrier frequency determiner 12 according to the first and second comparative examples described above.

In Fig. 9, an inverter loss computing unit 18a is newly added in the interior of a loss computing unit 15Da, and this point is different from Fig. 8. Since the loss of the inverter includes the conduction loss and the switching loss, the loss of the inverter may be calculated from the magnitude of the phase current and the magnitude of the DC voltage. This block is calculated from one number of pulses to another to obtain the computed loss values Loss 1 to Loss 5, and the number of pulses which brings about the least loss is obtained by a number of pulses compensator 14C, whereby the carrier frequency is determined.

Consequently, the operation of minimizing the loss including the inverter loss is enabled, and hence the drive system with hither efficiency may be realized.

### Third Embodiment

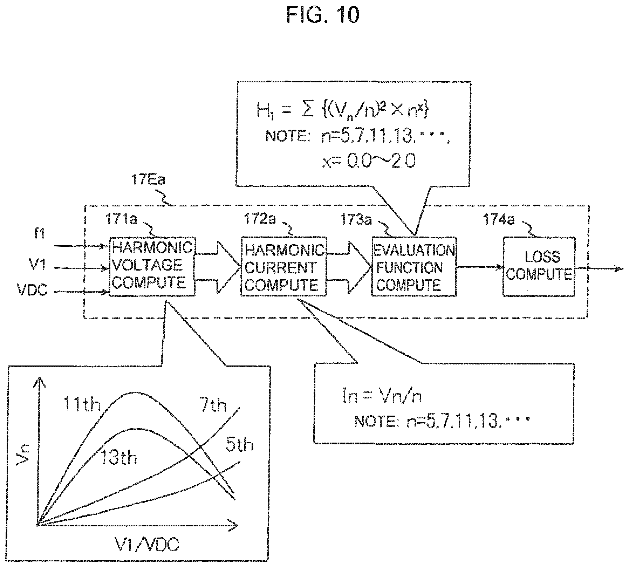

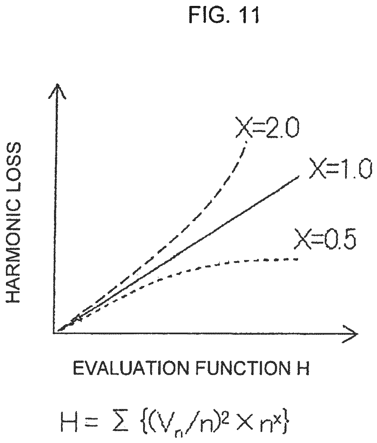

Referring now to Figs. 10 and 11, a third embodiment of the invention will be described.

The third embodiment relates to the harmonic loss computing unit of the first and second embodiments, which is realized by using the embodiment illustrated in Fig. 10 instead of the harmonic loss computing units 17a illustrated in Figs. 8 and 9.

A harmonic loss computing unit 17E in Fig. 10 includes a harmonic voltage computing unit 171a configured to calculate a harmonic voltage component by inputting the drive frequency f1, the voltage command V1, and the DC voltage detection value VDC, a harmonic current computing unit 172a configured to calculate the harmonic current from the harmonic current voltage component, an evaluation function computing unit 173a configured to compute an evaluation function corresponding to the harmonic loss further from this harmonic current value, and a loss computing unit 174a configured to calculate the harmonic loss on the basis of this value of the evaluation function.

The harmonic voltage computing unit is configured to obtain content percentages of the respective harmonic orders with respect to the modulation rate (Vl/VDC) from one number of pulses to another in a table, so that the content percentages may be obtained per order of the harmonics, such as the amount of volts included in a fifth component, for example, and outputs the magnitude of voltage Vn per order n.

The harmonic current computing unit 172a calculates values In corresponding to the currents of the respective harmonic components (=Vn/n) by dividing the harmonic voltage by the order. Although the current value may be calculated roughly by using a harmonic frequency and an inductance value instead of the order, it is also possible to employ the division by the order for performing the loss evaluation. Subsequently, the evaluation function computing unit 173a computes an evaluation function having a relative relation with the harmonic loss from the values In corresponding to the harmonic current.

The evaluation function computed here is an amount corresponding to the harmonic loss of the AC motor. For example, the secondary copper loss of the induction motor is a square of the current multiplied by R, where R is a secondary resistance. However, it is said that the harmonic loss is multiplied by x-th power of the order n by the influence of a skin effect of a secondary coil. The expression x = 0 means that the secondary resistance does not depend on the frequency, and such a case may occur depending on the structure of the rotating machinery. When the skin effect is strong, a value on the order of n = 0.5 to 2 is employed. This depends on the characteristic of the motor, and when the motor changes, the value of x also changes naturally. However, it was confirmed that x ≈ 1 is established from the test using a real machine.

In the embodiment illustrated in Fig. 10, the n-th order current component In (=Vn/n) is squared and then is multiplied by the x-th power of n as a weight, and the sum of all the components is used as an evaluation function H1. The relationship between the value of x and the harmonic loss is illustrated in Fig. 11. For example, it was confirmed in a certain AC motor that when the x = 1.0 (that is, the weight is n) was assumed, the harmonic loss and the evaluation function assumed a linear shape. In this manner, by introducing the evaluation function, the computation of the harmonic loss is easily performed. The loss computing unit 174a obtains the loss by multiplying the value of the evaluation function H1 by a coefficient. As regards the coefficient, the relation with respect to the loss may be obtained by actual measurement once in advance.

According to the third embodiment, computation of the loss with high degree of accuracy is enabled by the introduction of the evaluation function, and hence the AC motor drive system having a higher efficiency may be realized.

### Third Comparative Example

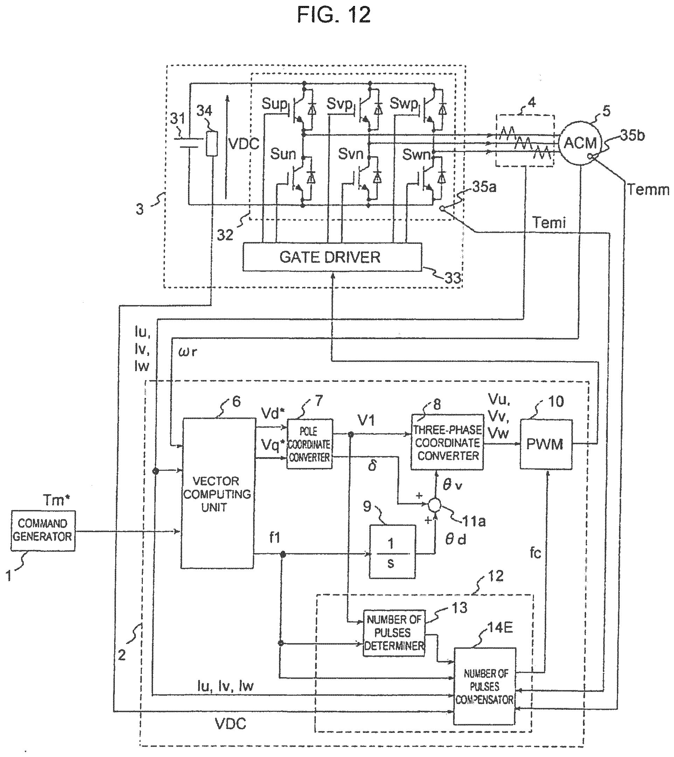

Referring now to Fig. 12, a third comparative example will be described.

The third comparative example illustrated in Fig. 12 has substantially the same configuration as the second comparative example. However, in the third comparative example an inverter temperature sensor 35a is added to the inverter main circuit unit 32 and a motor temperature sensor 35b is added to the AC motor 5, and temperature information of these sensors are introduced to a pulse compensator 14E as a new block. All of other components are the same as those of the second third comparative example.

The pulse compensator 14E performs the loss computation according to the operating state as described above so as to achieve the operation with the number of pulses which brings about the least loss. In this case, it is known that the inverter loss varies with the temperature of the inverter element, and the loss of the motor (especially the fundamental wave loss) changes with the temperature of the motor. Therefore, the loss computation with higher degree of accuracy may be realized by mounting temperature sensor 35a and 35b on the inverter and the AC motor, converting the values depending on the respective temperature states, and performing the loss computation. For example, the conduction loss is lowered along with the increase in temperature in the inverter loss computation, while the copper loss is increased along with the increase in temperature in the fundamental wave loss of the AC motor. With applying the compensation as described above, the loss computation with higher accuracy is enabled.

The compensation on the basis of the temperature does not necessarily have to be performed both for the inverter and the motor, and an effect may be expected even by the compensation only for one of the inverter and the motor. It is also possible to measure a value of resistance by using a change of the current or the inverter to read the temperature change indirectly without measuring the temperature directly.

### Fourth Embodiment

Subsequently, a fourth embodiment of the invention will be described.

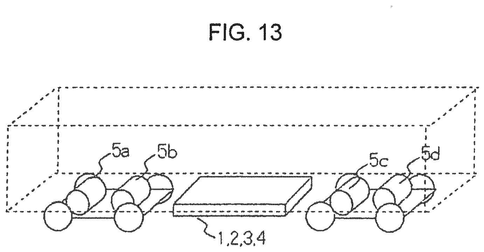

A railroad vehicle using the AC motor drive system of the invention is illustrated in Fig. 13.

In the railroad vehicle, the capacity of the motor is as large as 100 kW or more, and hence the carrier frequency cannot be set to a high value. Therefore, the synchronous PWM system with several pulses is used in the high-speed area. Since energy saving drive has to be realized on that basis, the AC motor drive system according to the invention is effective.

Fig. 13 illustrates a railroad vehicle system in which the AC motor drive system of the embodiments described above are mounted, and the induction motors 5a to 5b are driven as the AC motors. By the application of the invention, the railroad vehicle system which allows driving with the least loss of the system may be realized.

The embodiments of the invention have been described thus far. For the sake of convenience of description, the induction motor has been mainly described as the AC motor. However, other motors may be applied in the same manner as long as they are the AC motors. For example, a permanent magnet synchronous motor, a coil-type synchronous motor, and a synchronous machine on the basis of a reluctance torque are also the same. The invention is also applicable for controlling the motor in the same manner.

As described above, the invention is an art related to the drive system for the AC motor drive having a large capacity. This drive system may be applied mainly to railroad vehicle driving, general industries, wind force power generators, and diesel power generators, and is effective for improving efficiency of the entire system and energy saving.

## Claims

1. An AC motor drive system comprising:
a three-phase AC motor (5);
an inverter (3) configured to drive the three-phase AC motor; and
a controller (2) configured to drive the inverter by pulse width modulation,
**characterized in that** the AC motor drive system further comprises:
a number of pulses determiner (13) to determine the number of pulses, loss computing units (15a-15e) for respective numbers of pulses configured to compute a fundamental wave loss of the three-phase AC motor on the basis of the respective numbers of pulses and compute a harmonic loss caused by the inverter on the basis of the respective numbers of pulses and calculate the total losses of the respective numbers of pulses by adding the fundamental wave loss and the harmonic loss, and
a number of pulses compensator (14C) to select the number of pulses having the least total loss from the total loss values calculated by the loss computing units,
wherein the three-phase AC motor is driven by changing the number of pulses of the inverter from the computed loss value.

2. The AC motor drive system according to Claim 1, wherein
the loss computing units for respective numbers of pulses are configured to further compute a loss of the inverter.

3. The AC motor drive system according to Claims 1 or 2, wherein
when calculating the harmonic loss, a value obtained by dividing a voltage component of the harmonic by a harmonic frequency is squared for the respective frequency components of the harmonic voltage generated by the inverter, the squared value is multiplied by n-th order of the harmonic frequency, these values are computed for each of a plurality of the frequency components to obtain a summation as an evaluation index, and the harmonic loss caused by the three-phase AC motor is obtained on the basis of the evaluation index.

4. The AC motor drive system according to Claim 3, wherein
when computing the harmonic loss, the value of N falls within a range from 0 to 2.

5. The AC motor drive system according to any one of Claims 1 through 4, wherein
conditions of changeover of the number of pulses are compensated on the basis of temperature information of at least one of the inverter or the three-phase AC motor.

6. A motor vehicle according to any one of Claims 1 through 5, further comprising a drive system of the AC motor.

## Patentansprüche

1. Wechselstrommotorantriebssystem, umfassend:
einen Dreiphasenwechselstrommotor (5);
einen Wechselrichter (3), der konfiguriert ist, den Dreiphasenwechselstrommotor anzutreiben; und
eine Steuerungseinheit (2), die konfiguriert ist, den Wechselrichter durch Pulsbreitenmodulation anzutreiben,
**dadurch gekennzeichnet, dass** das Wechselstrommotorantriebssystem ferner Folgendes umfasst:
eine Anzahl von Pulsbestimmern (13), um die Anzahl von Pulsen zu bestimmen, Verlustberechnungseinheiten (15a-15e) für eine jeweilige Pulsanzahl, die konfiguriert sind, einen Grundwellenverlust des Dreiphasenwechselstrommotors auf Basis der jeweiligen Pulsanzahl zu berechnen und einen durch den Wechselrichter hervorgerufenen Oberwellenverlust auf Basis der jeweiligen Pulsanzahl zu berechnen und die Gesamtverluste der jeweiligen Pulsanzahl durch Addieren des Grundwellenverlusts und des Oberwellenverlusts zu berechnen, und
eine Anzahl von Pulskompensatoren (14C) zum Auswählen der Pulsanzahl mit dem geringsten Gesamtverlust aus den Gesamtverlustwerten, die durch die Verlustberechnungseinheiten berechnet werden,
wobei der Dreiphasenwechselstrommotor durch Ändern der Anzahl von Pulsen des Wechselrichters von dem berechneten Verlustwert angetrieben wird.

2. Wechselstrommotorantriebssystem gemäß Anspruch 1, wobei
die Verlustberechnungseinheiten für eine jeweilige Pulsanzahl konfiguriert sind, ferner einen Verlust des Wechselrichters zu berechnen.

3. Wechselstrommotorantriebssystem gemäß Anspruch 1 oder 2, wobei dann,
wenn beim Berechnen des Oberwellenverlusts ein durch Dividieren einer Spannungskomponente der Oberwelle durch eine Oberwellenfrequenz erhaltener Wert für die jeweiligen Frequenzkomponenten der durch den Wechselrichter erzeugten Oberwellenspannung quadriert wird, der quadrierte Wert mit der n-ten Ordnung der Oberwellenfrequenz multipliziert wird, diese Werte für jede aus einer Vielzahl der Frequenzkomponenten berechnet werden, um eine Summierung als einen Evaluierungsindex zu erhalten, und der durch den Dreiphasenwechselstrommotor hervorgerufene Oberwellenverlust auf Basis des Evaluierungsindexes erhalten wird.

4. Wechselstrommotorantriebssystem gemäß Anspruch 3, wobei
beim Berechnen des Oberwellenverlusts der Wert von N in einem Bereich von 0 bis 2 liegt.

5. Wechselstrommotorantriebssystem gemäß einem der Ansprüche 1 bis 4, wobei
Umschaltbedingungen der Pulsanzahl auf Basis von Temperaturinformationen von zumindest entweder dem Wechselrichter oder dem Dreiphasenwechselstrommotor ausgeglichen werden.

6. Kraftfahrzeug gemäß einem der Ansprüche 1 bis 5, ferner umfassend ein Antriebssystem des Wechselstrommotors.

## Revendications

1. Système d'entraînement de moteur en courant alternatif (AC) comprenant :
un moteur triphasé AC (5) ;
un onduleur (3) configuré pour entraîner le moteur triphasé AC ; et
un dispositif de commande (2) configuré pour entraîner l'onduleur par modulation de largeur d'impulsion,
**caractérisé en ce que** le système d'entraînement de moteur AC comprend en outre :
un dispositif de détermination de nombre d'impulsions (13) pour déterminer le nombre d'impulsions, des unités de calcul de perte (15a-15e) pour des nombres respectifs d'impulsions configurées pour calculer une perte d'onde fondamentale du moteur triphasé AC sur la base des nombres respectifs d'impulsions et pour calculer une perte d'harmonique provoquée par l'onduleur sur la base des nombres respectifs d'impulsions et calculer les pertes totales des nombres respectifs d'impulsions en additionnant la perte d'onde fondamentale et la perte d'harmonique, et
un compensateur de nombre d'impulsions (14C) pour sélectionner le nombre d'impulsions ayant la perte totale la plus faible parmi les valeurs de perte totale calculées par les unités de calcul de perte,
dans lequel le moteur triphasé AC est entraîné en changeant le nombre d'impulsions de l'onduleur à partir de la valeur de perte calculée.

2. Système d'entraînement de moteur AC selon la revendication 1, dans lequel
les unités de calcul de perte pour des nombres respectifs d'impulsions sont configurées pour calculer en outre une perte de l'onduleur.

3. Système d'entraînement de moteur AC selon les revendications 1 ou 2, dans lequel
lors du calcul de la perte d'harmonique, une valeur obtenue en divisant une composante de tension de l'harmonique par une fréquence harmonique est élevée au carré pour les composantes de fréquence respectives de la tension harmonique générée par l'onduleur, la valeur au carré est multipliée par le n-ième ordre de la fréquence harmonique,
ces valeurs sont calculées pour chacune d'une pluralité de composantes de fréquence afin d'obtenir une sommation en tant qu'indice d'évaluation, et la perte d'harmonique provoquée par le moteur triphasé AC est obtenue sur la base de l'indice d'évaluation.

4. Système d'entraînement de moteur AC selon la revendication 3, dans lequel
lors du calcul de la perte d'harmonique, la valeur de N se situe dans une plage allant de 0 à 2.

5. Système d'entraînement de moteur AC selon l'une quelconque des revendications 1 à 4, dans lequel
les conditions de changement du nombre d'impulsions sont compensées sur la base des informations de température d'au moins l'un parmi l'onduleur ou le moteur triphasé AC.

6. Véhicule à moteur selon l'une quelconque des revendications 1 à 5, comprenant en outre un système d'entraînement du moteur AC.
